# EUROPÄISCHE PATENTSCHRIFT

(11) **EP 2 769 832 B1**
(45) Veröffentlichungstag und Bekanntmachung des Hinweises auf die Patenterteilung: **29.08.2018**
(21) Anmeldenummer: 14156239.7
(22) Anmeldetag: 21.02.2014
(51) Int. Cl.: B29C 70/46, B29C 70/54, B29C 70/56, B29C 70/34

(54) **Verfahren zur Herstellung eines flächigen Leichtbaumaterials bestehend aus Verstärkungsfasern und thermoplastischem Kunststoff**
Method for manufacturing a flat lightweight material consisting of reinforcing fibres and thermoplastic material
Procédé de fabrication d'un matériau de construction léger plat composés de fibres de renforcement et de matière synthétique thermoplastique

(30) Priorität: 21.02.2013 DE 102013101723
(43) Veröffentlichungstag der Anmeldung: 27.08.2014
(73) Patentinhaber: Sorcole GmbH, 94116 Hutthurm (DE)
(72) Erfinder: Müller, Norbert, 94032 Passau (DE); Brunner, Günter, 94116 Hutthurm (DE)
(74) Vertreter: Benninger, Johannes

(56) Entgegenhaltungen:
- DE-A1- 4 035 224
- DE-A1- 4 139 035
- DE-A1- 10 259 883
- DE-A1- 19 922 799
- DE-A1-102009 024 789
- DE-B- 1 056 361
- US-A1- 2006 289 293
- US-A1- 2011 200 785

## Beschreibung

Die vorliegende Erfindung betrifft ein Verfahren zur Herstellung eines flächigen Leichtbaumaterials, das im Wesentlichen aus Verstärkungsfasern und thermoplastischem Kunststoff gebildet ist.

Flächige Leichtbaumaterialien, die aus Verstärkungsfasern und einem thermoplastischen Kunststoff bestehen, werden vorwiegend endlos in semikontinuierlichen oder kontinuierlichen Verfahren wie dem Heißintervallpressverfahren, dem Doppelbandpressverfahren oder dem Pultrusionsverfahren hergestellt.

Aus dem Stand der Technik sind verschiedene Verfahren zur Herstellung von Kunststoff-Faserverbundbauteilen bekannt. So offenbart bspw. die EP 0 423 676 A2 ein Verfahren zum Herstellen von spritzgegossenen Verbundbauteilen aus Kunststoff mittels einer mehrteiligen Spritzgussform. In eine untere Backe der Spritzgussform wird ein thermoplastischer Kunststoff eingelegt, wonach darauf ein Verstärkungsgewebeabschnitt aufgelegt wird. Auch auf einer der oberen Backe der Spritzgussform zugewandten Seite des Gewebeabschnittes wird eine thermoplastische Schicht aufgebracht, bevor die Backen gegeneinander bewegt und die Spritzgussform geschlossen wird.

Ein weiteres Spritzgießverfahren zur Herstellung von faserverstärkten Kunststoffbauteilen durch Einspritzen einer Thermoplastschmelze in ein Formwerkzeug ist in der WO 2011/020841 A1 offenbart. In einem ersten Verfahrensschritt wird dort ein flächiger Zuschnitt mit zwei oder mehreren Fasergeweben, die mit einem thermoplastischen Kunststoff getränkt sind, über dessen Erweichungstemperatur erwärmt. Anschließend wird der Zuschnitt an eine von zwei Innenwänden des Formwerkzeugs angelegt und dieses geschlossen, so dass der Zuschnitt verdichtet wird und die an den beiden Innenwänden anliegenden Randbereiche der Zuschnitte verfestigt werden und dort anhaften. In einem weiteren Verfahrensschritt wird das Werkzeug auf eine gewünschte Weite eingestellt und hierfür um einen geringen Betrag geöffnet und die Thermoplastschmelze eingespritzt. Durch Schließen des Werkzeuges wird die Schmelze im Zuschnitt verteilt. Nach dem Abkühlen kann das Werkzeug geöffnet und das fertige Bauteil entnommen werden.

Die DE 10 2009 024 789 A1 beschreibt ein weiteres Verfahren zur Herstellung von Formteilen aus faserverstärktem thermoplastischem Kunststoff. Als Faserverstärkung wird ein Textilwerkstoff vorgeschlagen, der in eine Spritzgussform eingelegt und mit thermoplastischem Kunststoff umspritzt oder durchspritzt wird.

Die DE 10 2011 014 686 A1 offenbart ein Verfahren zur Herstellung eines aus Verstärkungsfasern und aus thermoplastischem Kunststoff gebildeten flächigen Leichtbaumaterials, bei dem in einem ersten Schritt ein als Grundkörper oder Matrix für das Faserverbundmaterial des Leichtbaumaterials vorgesehene thermoplastische Kunststoff in eine noch leere Spritzgussform eingespritzt wird und nach dem Öffnen der Spritzgussform sowie gegebenenfalls Entnahme des Grundkörpers oder der Matrix aus der Spritzgussform in einem zweiten Schritt die Temperatur einer Kontaktfläche des Grundkörpers oder der Matrix und von als Verstärkung für das Faserverbundmaterial vorgesehenen Verstärkungsfasern erhöht wird, wonach in einem weiteren Schritt die als Verstärkung für das Faserverbundmaterial vorgesehenen Verstärkungsfasern auf dem Grundkörper oder der Matrix angeordnet werden, so dass die Verstärkungsfasern nach dem Erstarren des aufgeschmolzenen Bereichs fest mit dem Grundkörper oder der Matrix verbunden sind. Nach dem Anordnen der als Verstärkung für das Faserverbundmaterial vorgesehenen Verstärkungsfasern auf dem Grundkörper oder der Matrix kann durch Schließen des Werkzeugs eine Kraft auf die als Verstärkung für das Faserverbundmaterial vorgesehenen Verstärkungsfasern ausgeübt werden.

Die US 2006/289 293 A1 offenbart eine zusammengesetzte Spritzgussform mit einem Grund- oder Hauptkörper, einer auf dem Grund- oder Hauptkörper ausgebildeten Prägeschicht, sowie einer Schutzschicht, die wiederum auf der Prägeschicht aufgebracht ist. Die Spritzgussform umfasst eine obere Seite und eine untere Seite, die beide den gleichen Schichtaufbau aufweisen. Die obere Seite und die untere Seite können unterschiedliche Oberflächenstrukturierungen aufweisen.

Aus der DE 102 59 883 A1 ist ein Verfahren zur Herstellung eines Verbundwerkstoffs aus orientierten und nicht orientierten Thermoplasten bekannt. Die Thermoplaste werden auf eine Temperatur oberhalb des Schmelzpunkts der höher schmelzenden Thermoplaste erwärmt. Die orientierten Thermoplaste werden in Richtung ihrer Orientierung unter Spannung gehalten. Durch das Halten unter Spannung ist der Schmelzpunkt der orientierten Thermoplaste höher, als der Schmelzpunkt der höher schmelzenden Thermoplaste. Fasern und/oder Bändchen enthaltend orientierte Thermoplaste können zur Verstärkung des Verbundwerkstoffs in die als Matrix dienenden, nicht orientierten Thermoplaste eingebracht werden.

Die DE 35 42 217 A1 offenbart schließlich ein Verfahren zur Herstellung faserverstärkter Bauteile aus Thermoplasten, bei dem Vorformlinge aus Thermoplast und Vorformlinge aus Verstärkungsfasern durch Druck und Wärme miteinander verbunden werden.

Die US 2011/0200785 A1 offenbart weiterhin einen Verbundwerkstoff, der aus mindestens zwei verschiedenen Komponenten besteht und aus kontinuierlichen Fasern und einem Kern gebildet ist. Die Fasern können unterschiedliche Ausrichtungen aufweisen, was Auswirkungen auf die Belastung oder Festigkeit des Verbundwerkstoffs hat. Es können auch Areale mit unterschiedlichen mechanischen Eigenschaften hergestellt werden.

Aus der DE 199 22 799 A1 ist ein Harzinjektionsverfahren zur Herstellung eines Kunststoffformteils bekannt, bei dem in einem Drapierwerkzeug, das einen Spannrahmen zum Vorspannen von Fasermaterial, ein aus den Fasern gebildeter Vorformling erstellt wird. Das Fasermaterial des Vorformlings kann solchermaßen verwerfungsfrei in die Kavität des Drapierwerkzeuges eingezogen werden, was die Herstellung komplexerer Geometrien ermöglicht.

Die DE 40 35 224 A1 offenbart ein Verfahren zum Vorformen von Verstärkungseinlagen für Kunststoffformteile, bei denen eine Verstärkungseinlage oder ein Einlagenstapel aufgeheizt und im warmen Zustand in einem mehrteiligen Werkzeug einer Vorformpresse vorgeformt wird. Bei dem Verfahren wird die Verstärkungseinlage oder der Einlagenstapel während der Vorformung in einem Spannrahmen gehalten.

Schließlich offenbart die DE 41 39 035 A1 ein Verfahren und eine Vorrichtung zum Herstellen laminierter Formteile durch Verpressen einer Grundschicht aus thermoplastischem Material mit einer vorgefertigten Deckschicht in einer aus einer ersten und zweiten Formhälfte bestehenden Pressform. In einer ersten Phase wird bei geöffneten Formhälften das thermoplastische Material in die erste Formhälfte eingebracht und vorgeformt. Die vorgefertigte Deckschicht wird zwischen die Formhälften eingebracht und dabei in der zweiten Formhälfte tiefgezogen. In einer zweiten Phase werden die Formhälften geschlossen und dadurch das thermoplastische Material mit der Deckschicht verpresst.

Die in der bekannten Weise hergestellte Platten- oder Rollenware kann zwar gerichtete Eigenschaften aufweisen, womit im Wesentlichen eine Vorzugsorientierung gemeint ist. Dem Grundsatz nach sind die Eigenschaften der Erzeugnisse aber in allen Bereichen der Fläche weitgehend gleich. Diese in etwa gleichen mechanischen Eigenschaften der flächigen Erzeugnisse in den Vorzugsrichtungen bzw. in allen Bereichen sind für kontinuierlich produzierte Platten-, Band- oder Bahnware charakteristisch. Etwaige kleine lokale Unterschiede, z.B. bei der Dicke und dem Faservolumengehalt, sind unerwünschte Prozessschwankungen bzw. -abweichungen.

Ein vorrangiges Ziel der vorliegenden Erfindung besteht dagegen darin, ein Verfahren zur Herstellung eines faserverstärkten thermoplastischen Kunststoffes zur Verfügung zu stellen, mit dem bereits bei der Herstellung und/oder durch die Herstellung gezielt bestimmte, bei Bedarf lokal den jeweiligen Anforderungen entsprechend angepasste mechanische Eigenschaften eingeprägt werden können.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen. So sieht die Erfindung zur Erreichung des genannten Ziels ein Verfahren zur Herstellung eines im Wesentlichen aus Verstärkungsfasern und aus thermoplastischem Kunststoff gebildeten flächigen Leichtbaumaterials mit den Merkmalen des unabhängigen Verfahrensanspruchs 1 vor. Bei dem erfindungsgemäßen Verfahren wird in einem ersten Schritt der als Matrix für das Faserverbundmaterial des Leichtbaumaterials vorgesehene thermoplastische Kunststoff in eine noch leere Pressform eingespritzt. Nach dem Öffnen der Pressform werden in einem zweiten Schritt die als Verstärkung für das Faserverbundmaterial bzw. das Leichtbaumaterial vorgesehenen, in einem außerhalb der Pressform vorbereiteten Rahmen aufgespannten Verstärkungsfasern mitsamt dem Rahmen in die Form eingebracht, wonach in einem dritten Schritt die Pressform geschlossen wird und durch Verpressen die Verstärkungsfasern mit der thermoplastischen Matrix imprägniert werden. Gemäß der vorliegenden Erfindung wird bei diesem Verfahren zur Einbringung der Verstärkungsfasern ein Rahmen verwendet, in dem die Verstärkungsfasern außerhalb der Pressform aufgespannt werden und mit dem die Verstärkungsfasern in das Presswerkzeug eingebracht werden. Die Abmessungen des Rahmens richten sich nach der Größe des herzustellenden Leichtbaumaterials. Die Bespannung des Rahmens erfolgt vorzugsweise auf maschinelle und automatisierte Weise, insbesondere mit Hilfe eines Webroboters, wonach der fertig bespannte Rahmen mittels geeigneter Handlingseinrichtungen, bspw. mittels eines Handlingroboters in die geöffnete Form eingebracht werden kann, die anschließend mit dem darin befindlichen Rahmen geschlossen werden kann, um den thermoplastischen Kunststoff in die Form einzuspritzen.

Wahlweise kann bei dem Verfahren vorgesehen sein, dass der Rahmen nach Verpressen der Verstärkungsfasern im dritten Schritt von den Fasern getrennt wird und/oder aus der Pressform entnommen wird. Ggf. kann es je nach Konfiguration der Pressform auch sinnvoll sein, den Rahmen zunächst in der Form zu belassen und erst nach Fertigstellung des kompletten Bauteils, ggf. nach dessen Abkühlung von den Fasern zu trennen. Diese Trennung kann bspw. dadurch erfolgen, dass das Bauteil am Rand beschnitten wird, so dass die nach am Rahmen verbleibenden Faserreste entfernt und der Rahmen für einen weiteren Pressvorgang erneut mit dem Webroboter verarbeitet und mit einer weiteren Lage an Verstärkungsfasern bestückt werden kann.

Die Verwendung eines solchermaßen definierten Rahmens hat bei dem erfindungsgemäßen Verfahren den besonderen Vorteil, dass die Verstärkungsfasern in gewünschter Weise innerhalb der vom Rahmen ausgespannten Fläche verteilt werden können. So können die Verstärkungsfasern insbesondere in einer auf die Materialeigenschaften des Leichtbaumaterials abgestimmten belastungsgerechten Orientierung in dem Rahmen aufgespannt werden, wodurch sich die Material-, Elastizitäts- und Festigkeitseigenschaften des auf diese Weise hergestellten Bauteils gezielt beeinflussen und definieren lassen.

Wahlweise kann bei dem erfindungsgemäßen Verfahren vorgesehen sein, dass die Verstärkungsfasern zumindest abschnittsweise parallel und/oder in sich in spitzen und/oder stumpfen Winkeln zueinander kreuzenden Winkeln auf den Rahmen aufgespannt werden. Alternativ oder arealweise kann auch vorgesehen sein, dass die Verstärkungsfasern in auf die Materialeigenschaften des Leichtbaumaterials abgestimmter belastungsgerechter Dichte und/oder Abständen zueinander in dem Rahmen aufgespannt werden. Dabei kann weiterhin vorgesehen sein, dass die Verstärkungsfasern zumindest bereichsweise in annähernd gleichmäßiger Dichte über die vom Rahmen aufgespannte Fläche verteilt werden. Alle diese verschiedenen Varianten der Verarbeitung der Verstärkungsfasern mit Hilfe des verwendeten Rahmens dienen dazu, die Material-, Elastizitäts- und Festigkeitseigenschaften des Bauteils in seinen verschiedenen Bereichen weitgehend individuell und in jeweils unterschiedlicher Weise beeinflussen und definieren zu können, ohne dass damit eine homogene Gesamteigenschaft definiert werden muss, die an allen Stellen des Bauteils gleichermaßen vorliegt.

Mit dem erfindungsgemäßen Verfahren ist es möglich, flächige Leichtbaumaterialien mit einem Gewebe- oder Gelegeaufbau mit exakt definierbaren Eigenschaften herzustellen. Ein solcher Aufbau lässt sich mit den bisher bekannten kontinuierlichen Herstellverfahren, insbesondere im Heißintervallpressverfahren und im Doppelbandpressverfahren, nicht realisieren. Mit den herkömmlichen Herstellverfahren werden Materialaufbauten erreicht, bei denen die Faserausrichtung jeweils in Produktionsrichtung (Kettrichtung) und in 90°-Ausrichtung dazu (Schussrichtung) ausgerichtet sein kann.

Dagegen können mit dem erfindungsgemäßen Verfahren Verbundmaterialien mit einem nahezu beliebigen Gewebe- und Gelegeaufbau hergestellt werden. Im Besonderen können damit auch quasi-isotrope Gewebe- und Gelegeaufbauten z.B. mit drei, vier oder fünf Faserrichtungen hergestellt werden. Daneben sind spezielle Unidirektionalaufbauten wie bspw. ein sog. -15/0/15 °-Aufbau herstellbar.

Das erfindungsgemäße Verfahren ermöglicht es darüber hinaus, den thermoplastischen Kunststoff mit geringem Aufwand zu wechseln, wodurch eine laufende Produktion jederzeit und ohne große Verluste umgestellt und bspw. mit einem UVstabilisierten Kunststoff oder mit einem anders eingefärbten Kunststoff fortgeführt werden kann. Bei den etablierten kontinuierlichen Verfahren ist ein Material- oder Farbwechsel hingegen mit wesentlich größerem Zeitaufwand und mit erheblichen Anfahrverlusten verbunden, weil während des Materialwechsels auch Verstärkungsgewebe zugeführt werden müssen.

Bei dem erfindungsgemäßen Verfahren kann vorgesehen sein, dass als Pressform eine Form verwendet wird, die innerhalb eines Fertigungszyklus' beheizt und wieder gekühlt werden kann, wodurch während des Einspritzens des thermoplastischen Kunststoffs und während des Imprägnierens der Verstärkungsfasern mit dem thermoplastischen Kunststoff an Teilen der Pressform oder an der ganzen Pressform eine so hohe Temperatur vorliegt, dass der thermoplastische Kunststoff sich nicht verfestigt. Zur Beheizung der Pressform können bspw. elektrische Widerstandheizungen, induktive elektrische Heizungen oder Heizungen mit Medienkanälen eingesetzt werden, die von druckbeaufschlagtem Heißwasser, aufgeheiztem Öl, oder Dampf durchströmt werden.

Wahlweise können auch Teile der Pressform oder die ganze Pressform nach Abschluss der Imprägnierung der Verstärkungsfasern mit dem thermoplastischen Kunststoff abgekühlt werden, wodurch sich der thermoplastische Kunststoff verfestigt und das flächige Leichtbaumaterial aus der Form entnommen werden kann. Zur Kühlung der Pressform können insbesondere Bauteile oder Werkzeugabschnitte mit Medienkanälen verwendet werden, die von Wasser oder Stickstoff durchströmt werden.

Als Verstärkungsfasern eignen sich bspw. Glasfasern, Kohlenstofffasern, Aramidfasern, Basaltfasern oder auch andere mechanisch ausreichend stabile und automatisch verarbeitbare Fasern. Als thermoplastischer Kunststoff kann bspw. Polypropylen, thermoplastisches Polyurethan, Polyamid, Polybutylenterephtalat, Polyphenylensulfid, Polyetheretherketon, Polysulfon, Polyphenylsulfon oder ein anderes geeignetes Thermoplastmaterial eingesetzt werden. Die verwendeten Verstärkungsfasern können bspw. in Form von trockenen oder vorbenetzten Geweben oder Gelegen in die Pressform eingebracht werden. Wahlweise ist es auch möglich, die Verstärkungsfasern in Form von trockenen oder vorbenetzten Filamentgarnen oder Rovings in die Pressform einzubringen.

Für das Verfahren kann eine Pressform verwendet werden, deren beide Hälften in jedem Herstellzyklus aufgeheizt und wieder abgekühlt werden können. Damit wird erreicht, dass sich der thermoplastische Kunststoff während des Einspritzens und während des Imprägnierens der Verstärkungsfasern mit dem thermoplastischen Kunststoff nicht verfrüht verfestigt. Erst wenn die notwendige Imprägnierung der Fasern unter Einwirkung von Druck, der von der Presse aufgebracht wird, und Temperatur, die im Formhohlraum durch die Beheizung aufrechterhalten wird, erreicht ist, werden Teile der Pressform oder die ganze Pressform abgekühlt, wodurch sich der thermoplastische Kunststoff verfestigt und das flächige Leichtbaumaterial aus der Pressform entnommen werden kann. Eine Variante der verwendeten Pressform kann vorsehen, dass zur Beeinflussung der Anhaftung und Ablösung des eingespritzten Thermoplastmaterials an den beiden Seiten der Pressform unterschiedliche Oberflächenstrukturierungen eingearbeitet sind. Wahlweise können an den beiden Seiten der Pressform unterschiedliche Oberflächenbeschichtungen aufgebracht sein.

Bei dem erfindungsgemäßen Verfahren ist vorgesehen, zur Einbringung der Verstärkungsfasern einen Rahmen zu verwenden, in dem die Verstärkungsfasern außerhalb der Pressform aufgespannt werden und mit dem die Verstärkungsfasern in das Presswerkzeug eingebracht werden. So können bspw. die Verstärkungsfasern in Form von Filamentgarnen oder Rovings an Umlenkpunkten oder Anschlagpunkten am Rahmen oder an der Pressform angeschlagen werden, wodurch die Verstärkungsfasern immer an der gleichen Stelle eingebracht werden. Der Rahmen kann aus der Pressform entnommen werden und die Verstärkungsfasern in Form von Geweben, Gelegen, einzelnen Filamentgarnen oder Rovings können darin aufgespannt werden. Der dergestalt mit den Verstärkungsfasern bestückte Rahmen wird anschließend in das Presswerkzeug eingelegt, wo die Verstärkungsfasern mit dem thermoplastischen Kunststoff imprägniert werden.

Bei der Imprägnierung der Verstärkungsfasern mit dem thermoplastischen Kunststoff findet keine ausgeprägte Strömung der Schmelze statt, weil der Schritt "Einströmen der Kunststoffschmelze in die Pressform" von dem Schritt "Imprägnieren der Verstärkungsfasern" getrennt wurde. Der Aufbau aus den Verstärkungsfasern wird nur in Dickenrichtung verpresst. Damit werden unerwünschte Verschiebungen des Verstärkungsaufbaus fast vollständig eliminiert. Die Verstärkungsgewebe sowie einzelne Filamentgarne und Rovings werden überdies vorzugsweise in einem Rahmen gehalten. Auch damit werden unerwünschte Verschiebungen stark vermindert.

Die vorliegende Offenbarung betrifft des Weiteren eine besondere Gestaltung des Rahmens oder der Pressform, bei der mechanische Anschlag- oder Umlenkstellen für die einzubringenden Filamentgarne oder Rovings, beispielsweise in Form von Stiften, eingearbeiteten sind. Diese besondere Gestaltung erlaubt es Leichtbaumaterialien herzustellen, bei denen die Verstärkungsfasern immer an der gleichen Stelle der flächigen Erzeugnisse vorzufinden sind. Somit ist mit dem erfindungsgemäßen Verfahren eine stark verbesserte Qualitätskonstanz möglich. Dies gestattet wiederum die Fertigung von Leichtbaukonstruktionen mit kleinen Abminderungsfaktoren und schließlich leichtere Bauteile.

Die Herstellung der flächigen Leichtbaumaterialien in dem erfindungsgemäßen Verfahren lässt es zu, wichtige Eigenschaften des Materials in verschiedenen Bereichen unterschiedlich auszuführen. So kann durch eine bereichsweise veränderte Bestückung des Rahmens und entsprechender Gestaltung der Pressform bereichsweise die Dicke, oder der Faservolumengehalt, oder die Faserorientierung, oder der Laminataufbau verschieden ausgeführt werden. Ebenso können mehrere der vorgenannten Eigenschaften zugleich variiert werden und es können in derselben Platte verschiedene Verstärkungsfasern, z.B. Aramidfasern und Kohlenstofffasern, zum Einsatz gebracht werden.

Darüber hinaus kann auch das Format gemäß den Erfordernissen, die vom Produkt vorgegeben sind, angepasst werden. Neben rechteckigen Formaten sind auch andere Konturen wie trapezförmige, ovale, und kreisrunde Formate herstellbar. Durch Anpassung des Formats kann der Materialverschnitt bei der späteren Herstellung der Bauteile aus den flächigen Leichtbaumaterialien auf ein Minimum verringert oder ganz vermieden werden.

Somit erlaubt das erfindungsgemäße Verfahren die Herstellung von flächigen Leichtbaumaterialien, deren Eigenschaften bereichsweise bereits auf die Anforderungen der daraus herzustellenden Bauteile abgestimmt sind. Mit diesen bereichsweise angepassten Leichtbaumaterialien können besonders leistungsstarke Bauteile mit besonders geringem Gewicht einfach und in großer Stückzahl hergestellt werden.

Wenn im vorliegenden Zusammenhang auch meist von flächigen Leichtbaumaterialien oder auch von Bauteilen die Rede ist, so ist damit in aller Regel ein sog. Halbzeug gemeint, das eine Fertigungszwischenstufe vor einer Weiterverarbeitung darstellt. Diese Halbzeuge aus flächigem Leichtbaumaterial sind in den meisten Fällen keine fertigen oder einbaufertigen Bauteile, sondern Rohteile, die weiterbearbeitet, weiterverarbeitet und ggf. noch weiter modifiziert werden, bevor sie ihren Endzustand als Bestandteile fertiger Bauteile oder komplexer Erzeugnisse erreichen.

Im Folgenden sollen Ausführungsbeispiele die Erfindung und ihre Vorteile anhand der beigefügten Figur näher erläutern.
Fig. 1 zeigt aufeinander folgende Verfahrensschritte bei der Herstellung eines thermoplastischen Leichtbaumaterials mit Faserverstärkung.
Fig. 2 zeigt in insgesamt elf aufeinander folgenden Prozessschritten die Herstellung eines thermoplastischen Leichtbaumaterials mit Faserverstärkung in einer zweiteiligen Pressform.
Fig. 3 zeigt vier schematische Darstellungen verschiedener Leichtbaumaterialien aus thermoplastischem Kunststoff und Verstärkungsfasern, die dem offenbarten Verfahren herstellbar sind. Zudem ist in Fig. 3 auch jeweils der Rahmen dargestellt, der bei der Herstellung der Leichtbaumaterialien vorzugsweise zum Einsatz kommt.
Fig. 4 zeigt in zwei perspektivischen Ansichten ein Ausführungsbeispiel eines Rahmens zur Aufspannung von Gewebe- oder Faserverstärkungen, wie er zur Herstellung eines Leichtbaumaterials verwendet werden kann.

Die dargestellten Ausführungsformen stellen lediglich Beispiele dar, wie das erfindungsgemäße Verfahren ausgestaltet sein kann, sind jedoch nicht als abschließende Begrenzung zu verstehen.

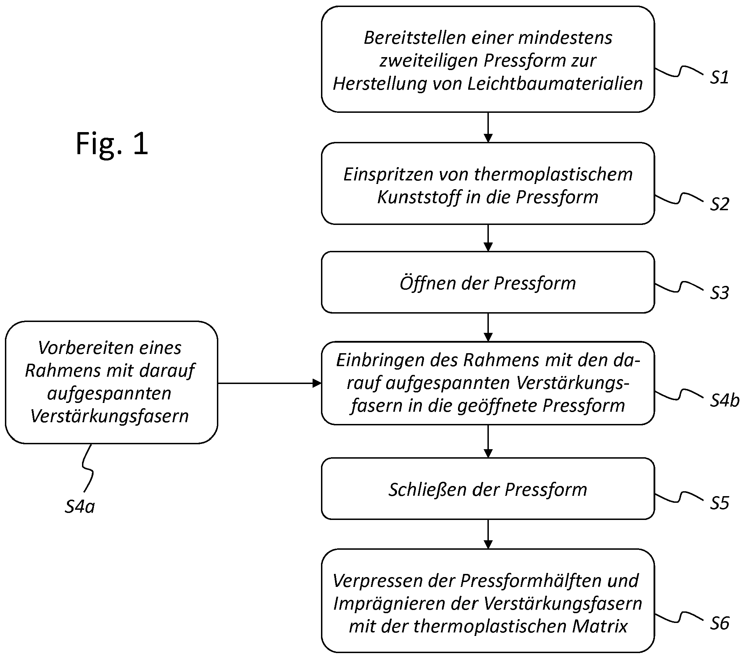

Die Fig. 1 verdeutlicht aufeinander folgende Verfahrensschritte bei der Herstellung eines Leichtbaumaterials mit Faserverstärkung. Hierbei wird in einem ersten Schritt S1 eine mindestens aus zwei Teilen bestehende Pressform für das Herstellen des Leichtbaumaterials bereitgestellt. In diese zunächst geschlossene Pressform wird in einem zweiten Schritt S2 thermoplastischer Kunststoff eingespritzt, wonach in einem dritten Schritt S3 die Pressform geöffnet werden kann, um in einem vierten Schritt S4b die zu verwendenden Verstärkungsfasern in die geöffnete Pressform eingelegt wird. Die im vierten Schritt S4b in die geöffnete Pressform eingebrachten Verstärkungsfasern wurden zuvor in einem vorgelagerten Schritt S4a auf einem Rahmen aufgespannt, der in fertig vorbereiteter Form in die Pressform eingelegt wird. Anschließend erst wird in einem fünften Schritt S5 die Pressform geschlossen. In einem sechsten Schritt S6 werden die Pressformhälften miteinander verpresst, wodurch die Verstärkungsfasern mit der thermoplastischen Matrix imprägniert werden.

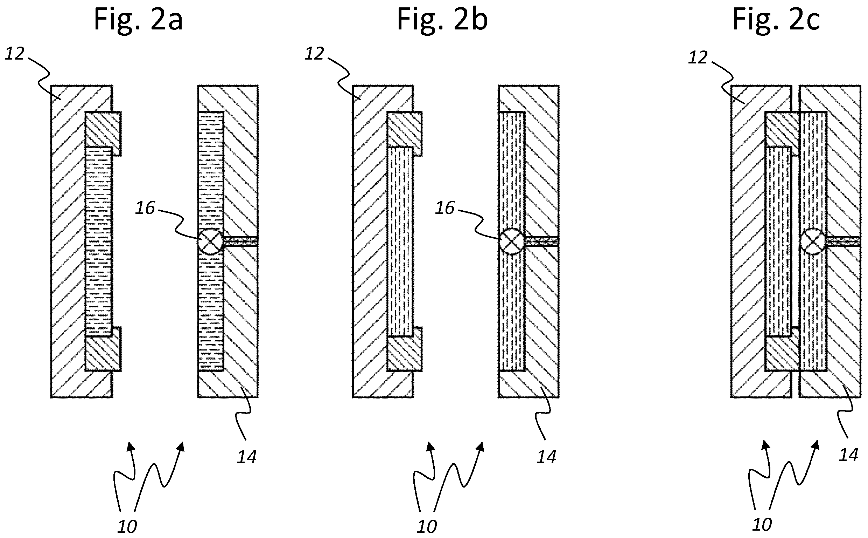

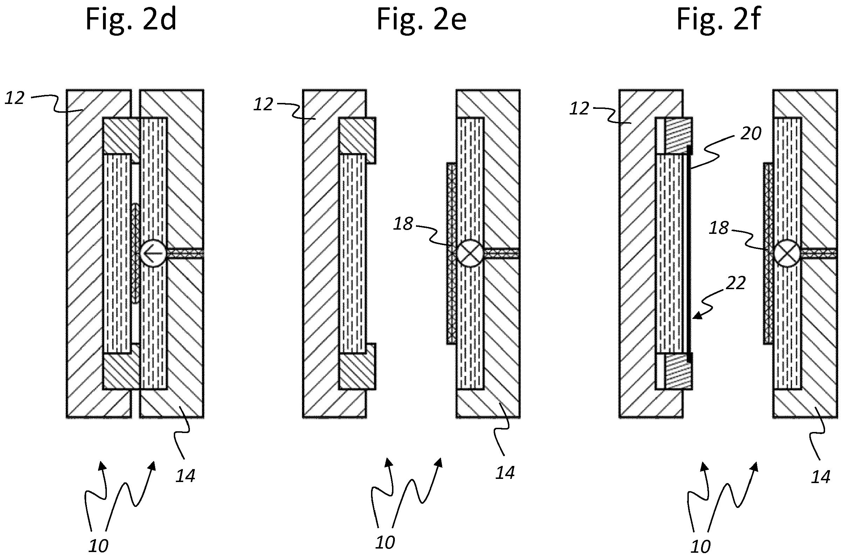

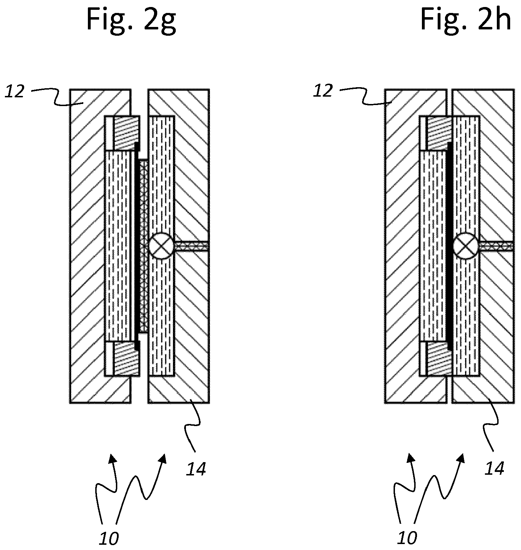

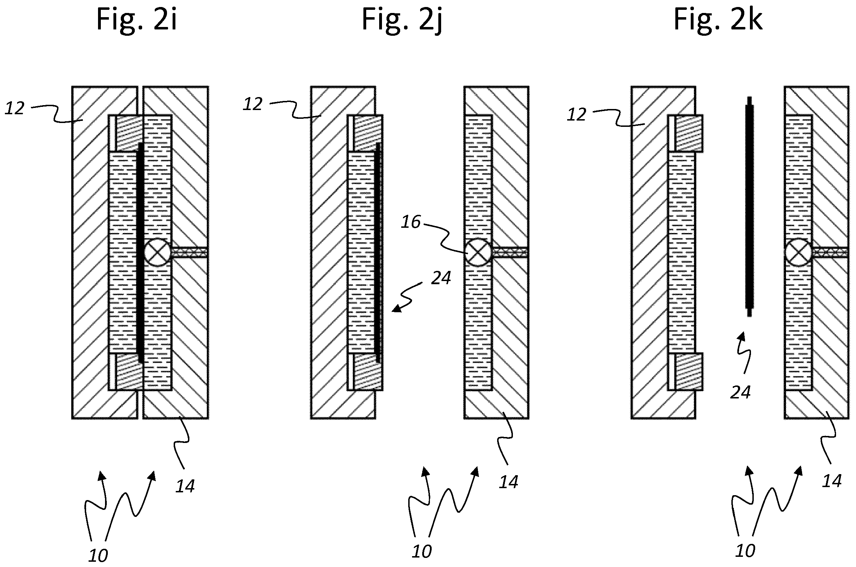

Die insgesamt elf schematischen Darstellungen der Fig. 2 zeigen in elf aufeinander folgenden Prozessschritten die Herstellung eines thermoplastischen Leichtbaumaterials mit Faserverstärkung in einer zweiteiligen Pressform. So zeigt die Fig. 2a eine geöffnete, noch kalte Pressform 10, die eine Temperatur von ca. 100 °C aufweisen kann. Die zweiteilige Pressform 10 umfasst im gezeigten Ausführungsbeispiel eine untere oder linke Formhälfte 12 und eine obere oder rechte Formhälfte 14. Eine in der rechten oder oberen Formhälfte 14 angeordnete Düse 16 zum Einbringen von thermoplastischem Kunststoff ist noch geschlossen, so dass die Fig. 2a die Ausgangsstellung der Pressform 10 zur Herstellung eines erfindungsgemäßen Leichtmaterials zeigt. Anschließend wird die zweiteilige Form 10 auf eine Temperatur von bspw. ca. 300 °C aufgeheizt (Fig. 2b) und im aufgeheizten Zustand geschlossen (Fig. 2c).

Im aufgeheizten, geschlossenen Zustand wird die Düse 16 geöffnet (Fig. 2d), wodurch das Einspritzen einer Thermoplastschmelze 18 eingeleitet wird. Gemäß Fig. 2e wird danach die Düse 16 geschlossen und damit das Einbringen der Thermoplastschmelze 18 unterbrochen und die zweiteilige Form 10 geöffnet. Die in die Form 10 eingebrachte Schmelze 18 bleibt dabei an einer Seite fixiert, in diesem Fall an der rechten Formhälfte 14, in der sich auch die Düse 16 befindet.

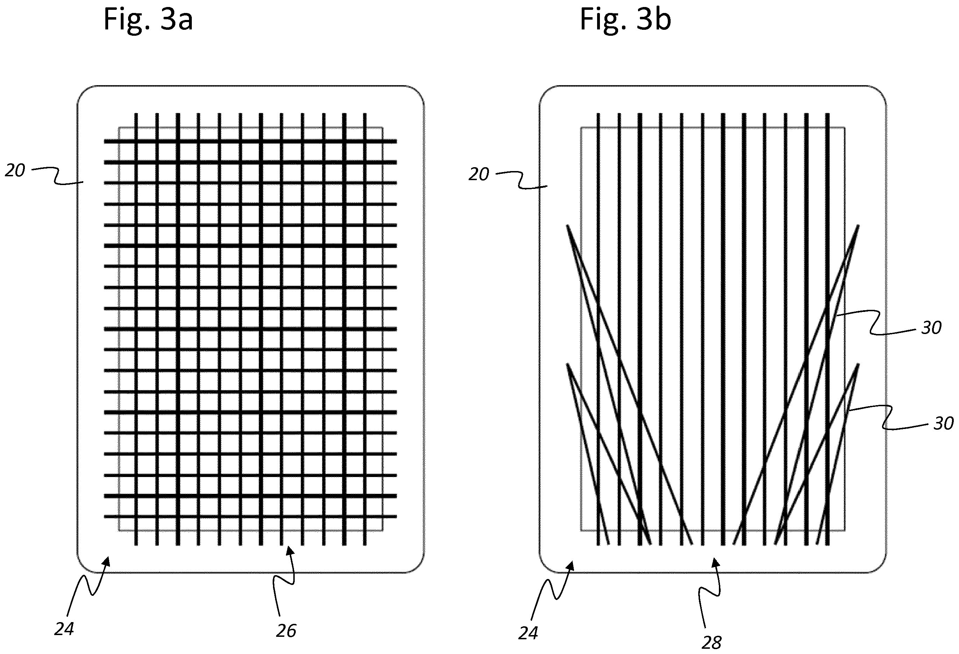

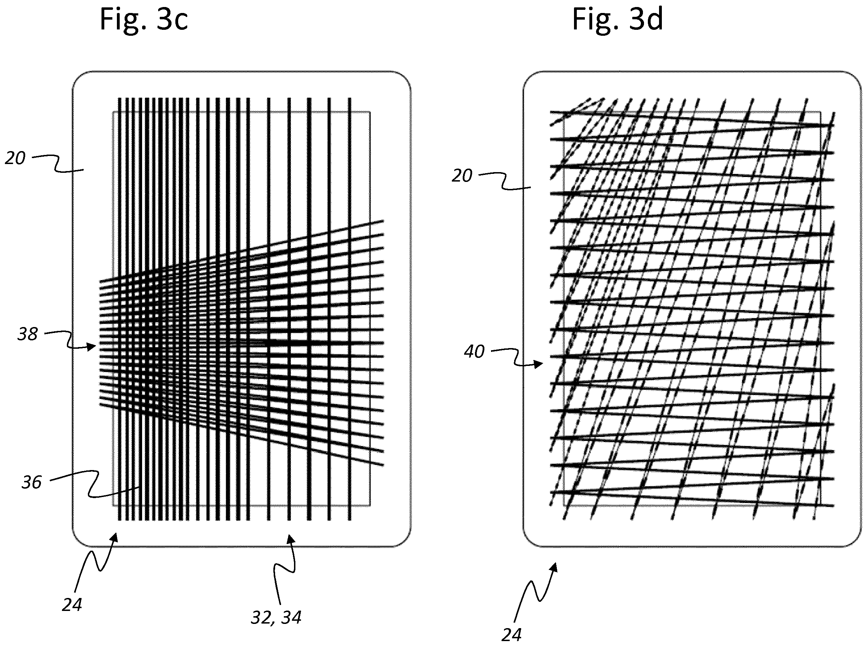

Die Fig. 2f zeigt den folgenden Verfahrensschritt, bei dem ein mit Verstärkungsfasern 22 bestückter Rahmen 20 eingelegt wird, bevor die Form 10 wiederum geschlossen (Fig. 2g) und die Verstärkungsfasern 22 in die Schmelze 18 eingedrückt werden. In einem folgenden Prozess- und Pressschritt (Fig. 2h) werden die Verstärkungsfasern 22 mit der Schmelze 18 imprägniert. Der Rahmen 20 mit den darin angeordneten Verstärkungsfasern 22 kann je nach Bedarf bspw. eine der Faserstrukturierungen gemäß Fig. 3b, Fig. 3c oder Fig. 3d aufweisen.

Danach kann die Form 10 abgekühlt werden (Fig. 2i), wobei sich die Thermoplastschmelze 18 verfestigt und das zu fertigende Leichtbaumaterial 24 gebildet wird. Nach dem Öffnen der abgekühlten Formhälften 12 und 14 (Fig. 2j) kann das fertige Leichtbaumaterial 24 abschließend entnommen werden (Fig. 2k). Da dieses normalerweise über die Faserenden noch mit dem Rahmen 20 verbunden ist, wird dieser durch Ausstanzen oder Ausschneiden vom Bauteil 24 getrennt, so dass er für weitere Fertigungsschritte wiederverwendet werden kann.

Die Fig. 3 zeigt in vier schematischen Darstellungen verschiedene Leichtbaumaterialien 24 aus thermoplastischem Kunststoff 18 und Verstärkungsfasern 22. So zeigt die schematische Ansicht der Fig. 3a einen konventionellen Aufbau eines Leichtmaterials 24 mit herkömmlich gestalteter Gewebeverstärkung 26. Das als Verstärkungsgeflecht 26 dienende Gewebe ist in regelmäßiger, gitternetzartiger Struktur angeordnet, so dass das Material in Längs- wie auch in Querrichtung mit einer ungefähr gleich großen Last beaufschlagt werden kann.

Die schematische Ansicht der Fig. 3b zeigt dagegen eine Faserstruktur 28 eines Leichtmaterials 24, das in einer Längsrichtung eine Faserverstärkung mit unidirektional ausgerichteten Fasern aufweist, während hierzu orthogonal angeordnete Querfasern entsprechend Fig. 3a fehlen. Stattdessen verfügt das Material 24 über diagonal verlaufende Zusatzverstärkungen 30 an zwei Ecken, so dass von einer belastungsgerechten Verstärkung an definierten Stellen gesprochen werden kann.

In ähnlicher Weise verdeutlicht die schematische Darstellung der Fig. 3c einen Aufbau 32 mit unidirektional ausgerichteten Fasern 34 in einer Längsrichtung, wobei die Abstände der Faserstränge zu einer Längsseite hin abnehmen, so dass sich dort eine Faserverstärkung 36 mit erhöhter Verdichtung findet. Eine lokale Verstärkung 38 mit zahlreichen Fasern, die quer zu den in Längsrichtung angeordneten Fasern 34, findet sich im mittleren Bereich des Materials 24. Zusätzlich sind diese Querfasern 38 aufgefächert, so dass sich eine gezielte Kräfteverteilung ergibt.

Die schematische Darstellung der Fig. 3d zeigt weiterhin einen Misch- oder Hybridaufbau 40 eines Materials 24, bei dem die Fasern in unterschiedlichen Längs-, Quer- und Diagonalrichtungen verlaufen. Zudem können unterschiedliche Fasern eingesetzt werden, so bspw. Glasfasern, Kohlenstofffasern und/oder Aramidfasern, wobei sich die unterschiedlichen Materialhäufungen oder -verteilungen nach den auftretenden Hauptbelastungen des Materials richten können.

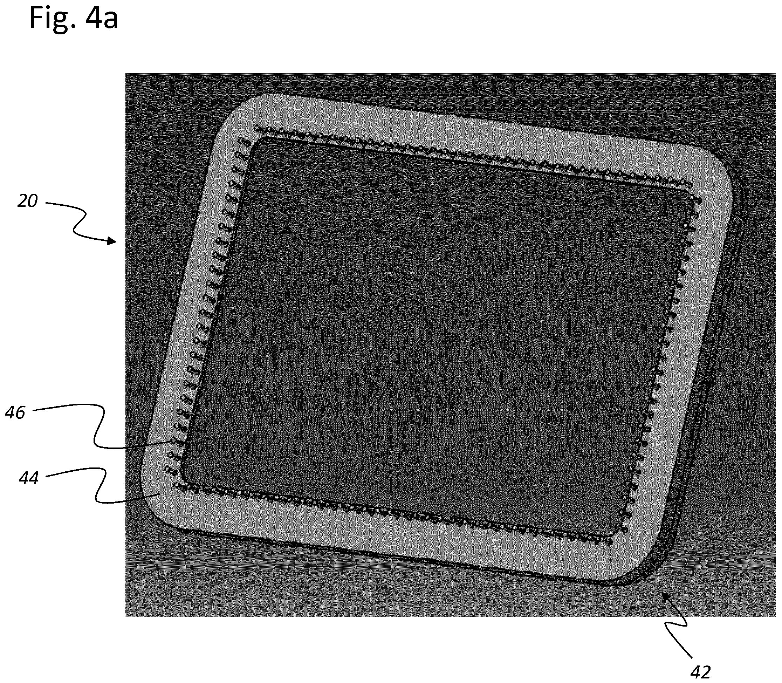

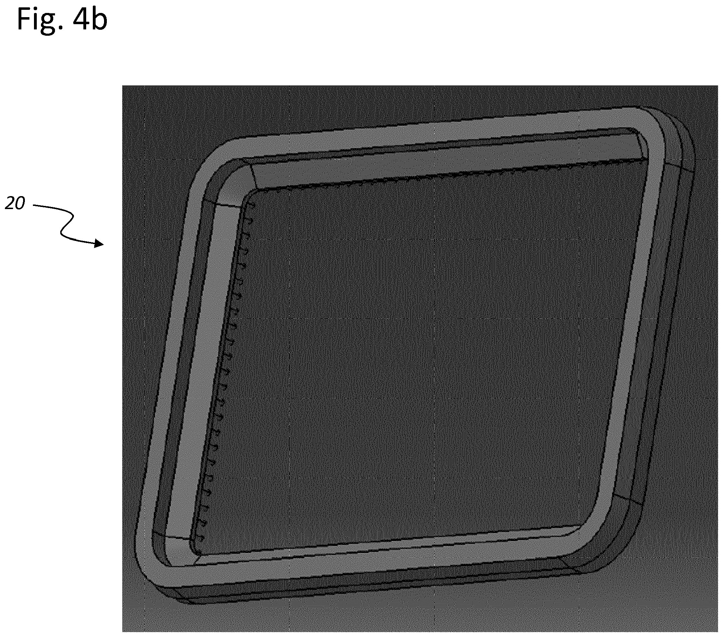

Die beiden perspektivischen Ansichten der Fig. 4 zeigen schließlich ein Ausführungsbeispiel eines Rahmens 20 zur Aufspannung von Gewebe- oder Faserverstärkungen, wie er zur Herstellung eines Leichtbaumaterials 24 gemäß der vorliegenden Offenbarung verwendet werden kann. Wie es die Fig. 4a erkennen lässt, kann der Rahmen 20 eine Rechteckform mit ggf. abgerundeten Ecken 42 aufweisen. An einer Flachseite 44 des Rahmens 20 sind entlang jeder Schmal- und Längsseite jeweils eine Vielzahl von Zapfen 46 angeordnet, die zur Aufspannung der Faserverstärkung gemäß Fig. 3 dienen. Gemäß Fig. 4b können die Schmal- und Längsseiten des Rahmens 20 bspw. einen L-förmigen Querschnitt aufweisen, was insbesondere der Anpassung an die Pressform 10 (Fig. 2) dienen kann.

Mit Hilfe des Rahmens 20 gemäß Fig. 4 können die Verstärkungsfasern außerhalb der Pressform 10 aufgespannt werden und mit dem Rahmen 20 in das Presswerkzeug 10 eingebracht werden. Die Abmessungen des Rahmens 20 richten sich nach der Größe des herzustellenden Leichtbaumaterials 24. Die Bespannung des Rahmens 20 erfolgt vorzugsweise auf maschinelle und automatisierte Weise, insbesondere mit Hilfe eines Webroboters (nicht dargestellt), wonach der fertig bespannte Rahmen 20 (vgl. Fig. 3) mittels geeigneter Handlingeinrichtungen, bspw. mittels eines Handlingroboters in die geöffnete Form 10 eingebracht werden kann (vgl. Fig. 2), die anschließend mit dem darin befindlichen Rahmen 20 geschlossen werden kann, um den thermoplastischen Kunststoff 18 in die Form 10 einzuspritzen.

Wie es die Fig. 3 erkennen lässt, hat die Verwendung eines solchen Rahmens 20 den Vorteil, dass die Verstärkungsfasern in gewünschter Weise innerhalb der vom Rahmen 20 ausgespannten Fläche verteilt werden können. So können die Verstärkungsfasern insbesondere in einer auf die Materialeigenschaften des Leichtbaumaterials 24 abgestimmten belastungsgerechten Orientierung in dem Rahmen 20 aufgespannt werden, wodurch sich die Material-, Elastizitäts- und Festigkeitseigenschaften des auf diese Weise hergestellten Bauteils 24 gezielt beeinflussen und definieren lassen.

Die Erfindung wurde unter Bezugnahme auf eine bevorzugte Ausführungsform beschrieben. Es ist jedoch für einen Fachmann vorstellbar, dass Abwandlungen oder Änderungen gemacht werden können, ohne dabei den Schutzbereich der nachstehenden Ansprüche zu verlassen.

### Bezugszeichenliste

- S1: erster Verfahrensschritt
- S2: zweiter Verfahrensschritt
- S3: dritter Verfahrensschritt
- S4: vierter Verfahrensschritt
- S4a: Vorbereiten des Rahmens (vorbereitender Teil des vierten Verfahrensschritts)
- S4b: Einlegen des Rahmens (fertigungsrelevanter Teil des vierten Verfahrensschritts)
- S5: fünfter Verfahrensschritt
- S6: sechster Verfahrensschritt

- 10: Pressform
- 12: unter Formhälfte, linke Formhälfte
- 14: obere Formhälfte, rechte Formhälfe
- 16: Düse, Spritzdüse
- 18: Schmelze, Thermoplastschmelze, Thermoplastkunststoff
- 20: Rahmen
- 22: Verstärkungsfasern
- 24: Bauteil, Leichtbaumaterial
- 26: Gewebeverstärkung
- 28: Faserstruktur
- 30: Zusatzverstärkung
- 32: unidirektionaler Aufbau
- 34: unidirektional ausgerichtete Fasern
- 36: Faserverstärkung mit erhöhter Verdichtung
- 38: lokale Verstärkung, Querfasern
- 40: Mischaufbau, Hybridaufbau
- 42: Ecke, abgerundete Ecke
- 44: Flachseite
- 46: Zapfen

## Patentansprüche

1. Verfahren zur Herstellung eines im Wesentlichen aus Verstärkungsfasern (22, 26) und aus thermoplastischem Kunststoff (18) gebildeten flächigen Leichtbaumaterials (24), bei dem in einem ersten Schritt der als Matrix für das Faserverbundmaterial (22, 26) des Leichtbaumaterials (24) vorgesehene thermoplastische Kunststoff (18) in eine noch leere Pressform (10) eingespritzt wird und nach dem Öffnen der Pressform (10) in einem zweiten Schritt die als Verstärkung (22, 26) für das Faserverbundmaterial bzw. das Leichtbaumaterial (24) vorgesehenen, in einem außerhalb der Pressform (10) vorbereiteten Rahmen (20) aufgespannten Verstärkungsfasern (22, 26) mitsamt dem Rahmen (20) in die Form (10) eingebracht werden, wonach in einem dritten Schritt die Pressform (10) geschlossen wird und durch Verpressen die Verstärkungsfasern (22, 26) mit der thermoplastischen Matrix (18) imprägniert werden, wobei bei dem Verfahren zur Einbringung der Verstärkungsfasern (22, 26) ein Rahmen (20) verwendet wird, in dem die Verstärkungsfasern (22, 26) außerhalb der Pressform (10) aufgespannt werden und mit dem die Verstärkungsfasern (22, 26) in das Presswerkzeug eingebracht werden, und wobei die Verstärkungsfasern (22, 26) in auf die Materialeigenschaften des Leichtbaumaterials (24) abgestimmter belastungsgerechter Orientierung in dem Rahmen (20) aufgespannt werden,
**dadurch gekennzeichnet, dass**
die Verstärkungsfasern (22, 26) in auf die Materialeigenschaften des Leichtbaumaterials (24) abgestimmter belastungsgerechter Dichte und/oder Abständen zueinander in dem Rahmen (20) aufgespannt werden,
und dass die Verstärkungsfasern (22, 26) in Form von trockenen oder vorbenetzten Filamentgarnen oder Rovings auf den Rahmen (20) aufgespannt und/oder in die Pressform (10) eingebracht werden.

2. Verfahren nach Anspruch 1, bei dem der Rahmen (20) nach Verpressen der Verstärkungsfasern (22, 26) im dritten Schritt von den Fasern (22, 26) getrennt wird und/oder aus der Pressform (10) entnommen wird.

3. Verfahren nach Anspruch 1 oder 2, bei dem die Verstärkungsfasern (22, 26) zumindest abschnittsweise parallel und/oder in sich in spitzen und/oder stumpfen Winkeln zueinander kreuzenden Winkeln auf den Rahmen (20) aufgespannt werden.

4. Verfahren nach einem der Ansprüche 1 bis 3, bei dem die Verstärkungsfasern (22, 26) zumindest bereichsweise in annähernd gleichmäßiger Dichte über die vom Rahmen (20) aufgespannte Fläche verteilt werden.

5. Verfahren nach einem der Ansprüche 1 bis 4, bei dem die Pressform (10) innerhalb eines Fertigungszyklus' beheizt und/oder gekühlt wird, wobei zumindest während des Einspritzens des thermoplastischen Kunststoffs (18) und/oder während des Imprägnierens der Verstärkungsfasern (22, 26) mit dem thermoplastischen Kunststoff (18) an Teilen der Pressform (10) oder an der ganzen Pressform (10) eine ausreichend hohe Temperatur vorliegt, die in einem Bereich der Erweichungstemperatur oder der Erstarrungstemperatur des thermoplastischen Kunststoff (18) liegt.

6. Verfahren nach einem der Ansprüche 1 bis 5, bei dem Teile der Pressform (10) oder die ganze Pressform (10) nach Abschluss der Imprägnierung der Verstärkungsfasern (22, 26) mit dem thermoplastischen Kunststoff (18) abgekühlt werden, wodurch sich der thermoplastische Kunststoff (18) verfestigt und das flächige Leichtbaumaterial (24) aus der Pressform (10) entnommen werden kann.

7. Verfahren nach einem der Ansprüche 1 bis 6, bei dem als Verstärkungsfasern (22, 26) Glasfasern, Kohlenstofffasern, Aramidfasern oder Basaltfasern verwendet werden, und/oder bei dem als thermoplastischer Kunststoff (18) Polypropylen, thermoplastisches Polyurethan, Polyamid, Polybutylenterephtalat, Polyphenylensulfid, Polyetheretherketon, Polysulfon oder Polyphenylsulfon verwendet werden.

8. Verfahren nach einem der Ansprüche 1 bis 7, bei dem die Verstärkungsfasern (22, 26) in Form von trockenen oder vorbenetzten Geweben oder Gelegen auf den Rahmen (20) aufgespannt und/oder in die Pressform (10) eingebracht werden.

9. Verfahren nach einem der Ansprüche 1 bis 8, bei dem die Verstärkungsfasern (22, 26) in Form von Filamentgarnen oder Rovings an Umlenkpunkten oder Anschlagpunkten am Rahmen (20) oder an der Pressform (10) angeschlagen werden, wodurch die Verstärkungsfasern (22, 26) immer an der gleichen Stelle eingebracht werden.

## Claims

1. A process for manufacturing a flat lightweight material (24) formed essentially from reinforcing fibres (22, 26) and thermoplastic material (18) in which process, in a first step, the thermoplastic material (18) provided as a matrix for the fibre composite material (22, 26) of the lightweight material (24) is injected into a still empty press mould (10) and in a second step, after opening the press mould (10), the reinforcing fibres (22, 26) provided as a reinforcement (22, 26) for the fibre composite material and/or the lightweight material (24) and clamped in a frame (20) prepared outside of the press mould (10) are introduced into the mould (10) together with the frame (20), after which the press mould (10) is closed in a third step and the reinforcing fibres (22, 26) are impregnated with the thermoplastic matrix (18) by pressing, wherein the process for introducing the reinforcing fibres (22, 26) uses a frame (20), in which the reinforcing fibres (22, 26) are clamped outside the press mould (10) and with which the reinforcing fibres (22, 26) are introduced into the pressing tool, and wherein the reinforcing fibres (22, 26) are clamped in the frame (20) in a load-appropriate orientation in accordance with the material properties of the lightweight material (24),
**characterized in that**
the reinforcing fibres (22, 26) are clamped in the frame (20) at a density and/or at distances from one another that are load-appropriate in accordance with the material properties of the lightweight material (24),
and **in that** the reinforcing fibres (22, 26) are clamped to the frame (20) and/or are introduced into the press mould (10) in the form of dry or pre-wetted filament yarns or rovings.

2. The process as recited in claim 1 in which after pressing the reinforcing fibres (22, 26), in the third step the frame (20) is separated from the fibres (22, 26) and/or removed from the press mould (10).

3. The process as recited in claim 1 or 2 in which the reinforcing fibres (22, 26) are clamped to the frame (20) at least in sections in parallel and/or at angles crossing acute and/or obtuse to one another.

4. The process as recited in one of the claims 1 to 3 in which the reinforcing fibres (22, 26) are distributed over the area spanned by the frame (20) at least in regions in an approximately uniform density.

5. The process as recited in one of the claims 1 to 4 in which the press mould (10) is heated and/or cooled within a production cycle wherein a sufficiently high temperature is present on parts of the press mould (10) or on the entire press mould (10) at least during the injection of the thermoplastic material (18) and/or during the impregnation of the reinforcing fibres (22, 26) with the thermoplastic material (18), which temperature is within a range of the softening temperature or solidification temperature of the thermoplastic material (18).

6. The process as recited in one of the claims 1 to 5 in which parts of the press mould (10) or the entire press mould (10) are cooled after impregnation of the reinforcing fibres (22, 26) with the thermoplastic material (18) wherein the thermoplastic material (18) solidifies and the flat lightweight material (24) can be removed from the press mould (10).

7. The process as recited in one of the claims 1 to 6 in which glass fibres, carbon fibres, aramid fibres or basalt fibres are used as reinforcing fibres (22, 26) and/or in which polypropylene, thermoplastic polyurethane, polyamide, polybutylene terephthalate, polyphenylene sulfide, polyether ether ketone, polysulfone or polyphenylsulfone are used as thermoplastic material (18).

8. The process as recited in one of the claims 1 to 7 in which the reinforcing fibres (22, 26) are clamped on the frame (20) and/or introduced into the press mould (10) in the form of dry or pre-wetted fabrics or scrims.

9. The process as recited in one of the claims 1 to 8 in which the reinforcing fibres (22, 26) in the form of filament yarns or rovings are applied at deflection points or attachment points on the frame (20) or on the press mould (10), whereby the reinforcing fibres (22, 26) are always introduced at the same position.

## Revendications

1. Procédé de fabrication d'un matériau de construction léger (24) plat constitué sensiblement de fibres de renforcement (22, 26) et de matière thermoplastique (18), dans lequel dans une première étape la matière thermoplastique (18) prévue comme matrice pour le matériau composite renforcé par fibres (22, 26) du matériau de construction léger (24) est injectée dans un moule à compression (10) encore vide et après l'ouverture du moule à compression (10), dans une deuxième étape, les fibres de renforcement (22, 26), qui sont prévues en renfort (22, 26) du matériau composite renforcé par fibres ou du matériau de construction léger (24) et tendues dans un cadre (20) préparé à l'extérieur du moule à compression (10), sont introduites dans le moule (10) avec le cadre (20), après quoi dans une troisième étape le moule à compression (10) est fermé et les fibres de renforcement (22, 26) sont imprégnées avec la matrice thermoplastique (18) par compression, un cadre (20) étant utilisé lors du procédé d'introduction des fibres de renforcement (22, 26), dans lequel les fibres de renforcement (22, 26) sont tendues à l'extérieur du moule à compression (10) et avec lequel lesdites fibres de renforcement (22, 26) sont introduites dans l'outil de compression, et les fibres de renforcement (22, 26) étant tendues dans ledit cadre (20) dans une orientation répondant aux sollicitations et adaptée aux propriétés du matériau de construction léger (24),
**caractérisé en ce que**
les fibres de renforcement (22, 26) sont tendues dans ledit cadre (20) dans une densité et/ou des distances l'une par rapport à l'autre répondant aux sollicitations et adaptées aux propriétés du matériau de construction léger (24),
et que les fibres de renforcement (22, 26) sont tendues sur le cadre (20) sous forme de fils de filament ou de rovings secs ou prémouillés et/ou introduites dans le moule à compression (10).

2. Procédé selon la revendication 1, dans lequel le cadre (20) est séparé des fibres (22, 26) après la compression des fibres de renforcement (22, 26) à la troisième étape, et/ou est retiré du moule à compression (10).

3. Procédé selon la revendication 1 ou 2, dans lequel les fibres de renforcement (22, 26) sont tendues sur le cadre (20), de manière au moins parallèle en certains tronçons, et/ou dans des angles se croisant les uns les autres dans des angles aigus et/ou obtus.

4. Procédé selon l'une quelconque des revendications 1 à 3, dans lequel les fibres de renforcement (22, 26) sont réparties sur la surface tendue par le cadre (20) dans une densité approximativement homogène, au moins dans certaines zones.

5. Procédé selon l'une quelconque des revendications 1 à 4, dans lequel le moule à compression (10) est chauffé et/ou refroidi au sein d'un cycle de fabrication, une température suffisamment élevée régnant sur des parties du moule à compression (10) ou sur l'intégralité du moule à compression (10) au moins pendant que la matière thermoplastique (18) est injectée et/ou pendant que les fibres de renforcement (22, 26) sont imprégnées avec la matière thermoplastique (18), laquelle température se situe autour de la température de ramollissement ou de la température de solidification de la matière thermoplastique (18).

6. Procédé selon l'une quelconque des revendications 1 à 5, dans lequel des parties du moule à compression (10) ou l'intégralité du moule à compression (10) sont refroidies à la suite de l'imprégnation des fibres de renforcement (22, 26) avec la matière thermoplastique (18), ce qui entraîne le durcissement de la matière thermoplastique (18) et permet de retirer le matériau de construction léger (24) plat du moule à compression (10).

7. Procédé selon l'une quelconque des revendications 1 à 6, dans lequel des fibres de verre, des fibres de carbone, des fibres aramides ou des fibres de basalte sont utilisées comme fibres de renforcement (22, 26), et/ou dans lequel du polypropylène, du polyuréthane thermoplastique, du polyamide, du téréphtalate de polybutylène, du polysulfure de phénylène, du polyéther éther cétone, du polysulfone ou du polysulfone de phénylène sont utilisés comme matière thermoplastique (18).

8. Procédé selon l'une quelconque des revendications 1 à 7, dans lequel les fibres de renforcement (22, 26) sont tendues sur le cadre (20) sous forme de tissus ou de non-tissés secs ou prémouillés et/ou introduits dans le moule à compression (10).

9. Procédé selon l'une quelconque des revendications 1 à 8, dans lequel les fibres de renforcement (22, 26) sous forme de fils de filaments ou de rovings sont fixées à des points de renvoi ou points de butée sur le cadre (20) ou sur le moule à compression (10), permettant d'introduire les fibres de renforcement (22, 26) toujours au même endroit.
